Europäisches Patentamt

European Patent Office

Office européen des brevets

(11) Veröffentlichungsnummer: **0 108 222**
**A2**

(12) **EUROPÄISCHE PATENTANMELDUNG**

(21) Anmeldenummer: 83109146.7

(22) Anmeldetag: 16.09.83

(51) Int. Cl.³: **H 02 G 3/04**

(30) Priorität: 04.11.82 DE 3240645

(43) Veröffentlichungstag der Anmeldung:
16.05.84 Patentblatt 84/20

(84) Benannte Vertragsstaaten:
AT BE CH FR GB LI NL SE

(71) Anmelder: Rieth & Co. GmbH
Stuttgarter Strasse 128
D-7312 Kirchheim/Teck(DE)

(72) Erfinder:
Der Erfinder hat auf seine Nennung verzichtet

(74) Vertreter: Rüger, Rudolf, Dr.-Ing.
Webergasse 3 Postfach 348
D-7300 Esslingen/Neckar(DE)

(54) Traggestell.

(57) Ein Traggestell (1) zur Halterung von Kabelpritschen (7) oder - rinnen an Befestigungsflächen, wie Decken oder Böden von Gebäuden (2), weist einen aus gelochtem Profil-material bestehenden Stiel (5) auf, an dem Auslegen (6) befestigbar sind, die die Kabelpritschen (7) oder - rinnen tragen. Zur Befestigung des Stiels (5) an der Befestigungsflä-che ist wenigstens eine Kopfplatte (3) vorgesehen, die einen in Richtung des Stiels (5) verlaufenden Steg (4) und einen an den Steg angeformten Flansch (10) mit wenigstens einer Öffnung (12, 13) zur Aufnahme von Verankerungsbolzen (14) enthält. Der Steg (4) enthält ferner eine Stützvorrichtung (17), durch die der Stiel (5) gegen Schwenkbewegungen um eine senkrecht zu dem Steg (4) verlaufende Drehachse abstützbar ist.

Um bei der Montage des Stiels (5) an der Kopfplatte (3) ohne zusätzliche Befestigungselemente auskommen zu kön-nen, ist der Steg (4) der Kopfplatte (3) mit wenigstens einem in eine entsprechende Öffnung (26) des Stiels (5) eingreifenden einstückig angeformten Fortsatz (16) versehen.

Fig. 1

EP 0 108 222 A2

- 1 -

## Traggestell

Die Erfindung geht aus von einem Traggestell zur Halterung von Kabelpritschen oder -rinnen an Befestigungsflächen mit einem aus gelochtem Profilmaterial bestehenden Stiel, an dem die Kabelpritschen oder -rinnen tragende Ausleger befestigbar sind, mit wenigstens einer Kopfplatte, die einen in Richtung des Stiels verlaufenden Steg und einen an den Steg angeformten Flansch mit wenigstens einer einen in der Befestigungsfläche verankerten Bolzen aufnehmenden Öffnung aufweist, und mit einer an dem Steg vorgesehenen Stützvorrichtung, durch die der Stiel gegen Schwenkbewegungen um eine senkrecht zu dem Steg verlaufende Drehachse abstützbar ist.

Aus der Praxis ist ein derartiges Traggestell bekannt, bei dem die Kopfplatte von einem Winkelstück gebildet ist, dessen beide Schenkel durch eine dreieckförmige Verstärkungsplatte einstückig miteinander verbunden sind. Einer der beiden Schenkel wird mit einer entsprechenden Öffnung an einem in der Befestigungsfläche verankerten Bolzen befestigt, während der andere Schenkel den Stiel trägt, wobei der Stiel mit Hilfe einer Schraube an der Kopfplatte festgeschraubt ist.

Im montierten Zustand legt sich der Stiel an die Verstärkungsplatte an, so daß sich eine Sicherung gegen Schwenkbewegungen des Stiels ergibt.

Diese Konstruktion hat sich in der Praxis durchaus gut bewährt, jedoch erfordert das Festschrauben des Stiels an der Kopfplatte eine gewisse Zeit und es sind zusätzliche Befestigungselemente in Gestalt der Schraube und der Mutter erforderlich, um den Stiel mit der Kopfplatte zu verbinden.

Aufgabe der Erfindung ist es, das eingangs genannte Traggestell derart weiterzubilden, daß zur Verbindung der Kopfplatte mit dem Stiel keine weiteren Befestigungselemente erforderlich sind.

Zur Lösung dieser Aufgabe ist das erfindungsgemäße Traggestell durch die Merkmale des Hauptanspruches gekennzeichnet.

Durch diese Ausbildung des Traggestells wird die Montagezeit des Stiels an der Kopfplatte ganz wesentlich verringert und die Zahl der zur Montage des gesamten Traggestells erforderlichen Bauteile erheblich vermindert.

Die Stabilität der Verbindung der Kopfplatte mit dem Stiel kann verbessert werden, wenn an dem Steg mehrere Fortsätze vorgesehen sind, von denen jeder in eine zugehörige Öffnung des Stiels eingreift.

Hierbei kann es zweckmäßig sein, wenn die Fortsätze als Haken ausgebildet sind, die entgegen der normalerweise in Stiellängsrichtung wirkenden Kraftkomponente offen sind.

Eine sehr einfache Herstellung ergibt sich, wenn der Fortsatz aus dem Steg ausgeklinkt ist.

Die Stützvorrichtung kann vorteilhafterweise an dem Steg sitzende und seitlich an den Stiel angreifende Ansätze aufweisen, die bei der Herstellung der Kopfplatte ausgeklinkt oder in Form von Nasen in den Steg eingeprägt sein können.

Die Verwindungssteifigkeit der Kopfplatte wird erhöht, wenn ein zweiter Flansch angeformt ist, der dem Flansch zur Befestigung an der Befestigungsfläche gegenüberliegt.

Die Steifigkeit der Stützvorrichtung kann dadurch weiter verbessert werden, daß wenigstens einer der Ansätze eine senkrecht zu dem Stiel verlaufende Verlängerung des zweiten Flansches darstellt.

Die Montage des Traggestells wird weiter vereinfacht, wenn die Ausleger ebenfalls mit Haken ausgebildet sind, die in Form und Größe den Fortsätzen an dem Steg entsprechen, weil dann zur Befestigung der Kopfplatte und der Ausleger dieselben Öffnungen verwendet werden können und der Stiel als nach Bedarf abzulängende Meterware herstellbar ist.

Ein sehr steifer und flexibel einsetzbarer Stiel ergibt sich, wenn er als Vierkantrohr ausgebildet ist, von dem jede Seitenfläche Öffnungen für die Fortsätze des Steges aufweist. Ein guter Sitz des Stiels an der Kopfplatte bzw. ein guter Sitz der Ausleger an dem Stiel kann erreicht werden, wenn die Öffnungen in dem Stiel rechteckig ausgebildet sind, wobei zur Erhöhung der Tragfähigkeit die Öffnungen in jeder Seitenfläche jeweils paarweise

- 4 -

in mehreren Reihen übereinander angeordnet sein können.

Um zu verhindern, daß bei Erschütterungen die Haken, beispielsweise der Ausleger, aus den Öffnungen des Stiels freikommen, ist vorteilhafterweise in die freibleibende Restöffnung ein Sicherungsteil eingerastet. Das Sicherungsteil hat im einfachsten Fall etwa T-förmige Gestalt, wobei dessen Mittelschenkel wenigstens eine in Richtung auf den Querbalken der T-förmigen Gestalt offene Spreizfeder trägt, und die Höhe des Sicherungsteils etwa der Höhe der Restöffnung entspricht.

In der Zeichnung ist ein Ausführungsbeispiel des Gegenstandes der Erfindung dargestellt. Es zeigen:

Fig. 1  ein an der Decke eines Gebäudes befestigtes Traggestell gemäß der Erfindung, auf dessen Ausleger eine Kabelpritsche aufgelegt ist, in perspektivischer Darstellung,

Fig. 2  eine der Kopfplatten und das obere Ende des Stiels des Traggestells nach Fig. 1 in perspektivischer Darstellung,

Fig. 3  den Ausleger des Traggestells nach Fig. 1 in perspektivischer Darstellung und

Fig. 4  ein Sicherungsteil zum Sichern der in den Stiel eingehängten Ausleger, ebenfalls in perspektivischer Darstellung.

- 5 -

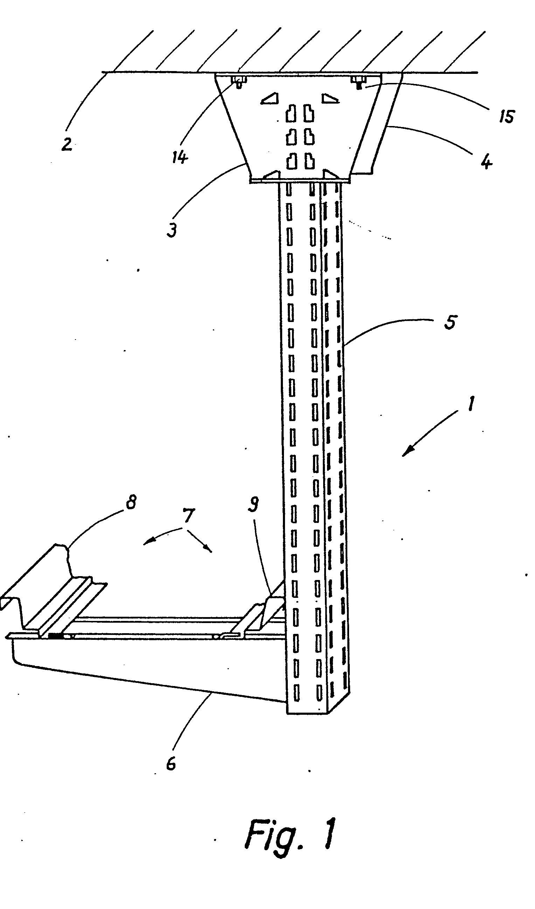

In Fig. 1 ist ein insgesamt mit 1 bezeichnetes Traggestell veranschaulicht, das an einer als Befestigungsfläche dienenden Decke 2 eines nicht weiter veranschaulichten Gebäudes befestigt ist. Das veranschaulichte Traggestell 1 besteht im wesentlichen
aus zwei an der Decke 2 befestigten, etwa trapezförmigen Kopfplatten 3a und 3b, in die ein Stiel 5 eingehängt ist. In den Stiel 5 wiederum ist ein Ausleger
6 eingehängt, auf dem eine Kabelpritsche 7 aufliegt,
von der lediglich zwei seitliche Längsholme 8 und 9
ausschnittsweise dargestellt sind.

Die beiden Kopfplatten 3a und 3b sind untereinander
gleich und bestehen aus einem genügend festen Material,
beispielsweise verzinktem Stahlblech.

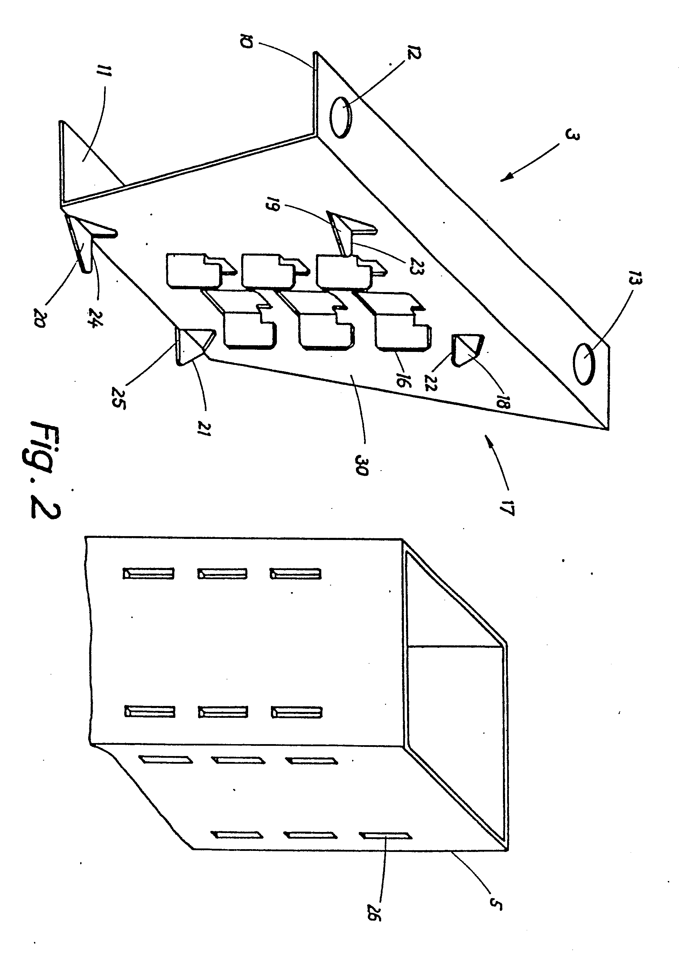

Wie aus Fig. 2 ersichtlich, ist an die obere bzw. die untere Basis der trapezförmigen Gestalt des Steges 4 der Kopfplatte 3 jeweils ein rechtwinklig nach außen weisender
Flansch 10 und 11 angeformt, die gemeinsam die Verwindungssteifigkeit der Kopfplatte 3 erhöhen. Zur Befestigung
der Kopfplatte 3 an der Befestigungsfläche 2 sind in
dem Flansch 10 zwei Befestigungsöffnungen 12 und 13
vorgesehen, die der Aufnahme von in der Decke 2 verankerten Befestigungsbolzen 14 und 15 dienen, wobei
zum Ausgleich von Unebenheiten der Befestigungsfläche
zwischen dieser und dem Flansch 10 eine Ausgleichsmutter vorgesehen sein kann.

Aus dem Steg 4 sind insgesamt sechs als Haken
ausgebildete Fortsätze 16 ausgeklinkt, die sich jeweils nach oben öffnen und paarweise in drei zueinander
parallelen, äquidistanten Zeilen angeordnet sind. Um zu
verhindern, daß der in die Haken 16 eingehängte Stiel 5
Drehmomente um eine auf der Kopfplatte 3 senkrecht
stehende Achse auf die Haken 16 übertragen kann, ist auf der Kopfplatte 3 eine Stützvorrichtung 17 vorgesehen. Die Stützvorrichtung 17 ist von vier ebenfalls aus dem Steg 4 ausgeklinkten Fortsätzen 18, 19, 20 und 21 gebildet, die in die gleiche Richtung aus der Kopfplatte 3 hervorstehen wie die Haken 16, nämlich in der entgegengesetzten Richtung wie die Flansche 10 und 11. Die Fortsätze 18 bis 21 weisen jeweils eine gerade Stützfläche 22, 23, 24 und 25 auf, die senkrecht auf dem Steg 4 steht, wobei sich jeweils die Stützflächen 22 und 23 und die Stützflächen 24 und 25 in einem Abstand gegenüberstehen, der etwa der Erstreckung des Stiels 5 in dieser Richtung entspricht.

Bei dem in Fig. 2 veranschaulichten Ausführungsbeispiel stehen die Fortsätze 20, 21 als gerade Verlängerungen des Flansches 11 aus der Kopfplatte 3 hervor, so daß sie gleichzeitig mit dem Abkanten des Flansches 11 hergestellt werden können. Anstatt die Ansätze 18, 19, 20 und 21 der Stützvorrichtung 17 aus der Kopfplatte 3 auszuklinken, ist es auch möglich, die Fortsätze in Gestalt von Nasen einzuprägen, so daß sie ebenfalls auf der dem Stiel 5 zugewandten Seite der Kopfplatte 3 hervorstehen und sich mit etwa geraden Anlageflächen an den Stiel 5 anlegen.

Der Stiel 5 ist, wie aus Fig. 2 ersichtlich, als Vierkantrohr mit quadratischem Querschnitt ausgebildet und besteht ebenfalls aus geeignetem Material, wie verzinktem Stahlblech. Zum Einhängen des Stiels 5 in die Haken 16 der Kopfplatte 3 sind in den vier Seitenflächen des Stiels 5 rechteckförmige Öffnungen 26 ausgebildet, die jeweils paarweise in zueinander parallelen und äquidistanten Reihen entlang der Längserstreckung des Vierkantrohres angeordnet sind. Der Abstand jeweils zweier benachbarter Reihen von Öffnungen 26 entspricht dem Abstand von Reihen Haken 16, während

- 7 -

der seitliche Abstand von Paaren von Öffnungen 26 dem seitlichen Abstand der zugehörigen Haken 16 entspricht. Auf diese Weise ist es möglich, die Kopfplatte 3 an jeder beliebigen Stelle des Stiels 5 einzusetzen, womit für den Stiel 5 Meterware verwendet werden kann.

Der Ausleger 6 weist im Querschnitt etwa U-förmige Gestalt auf, wobei an die freien Enden der Schenkel des U-förmigen Profils nach außen wegstehende Auflageflächen 27 und 28 angeformt sind, auf denen die Holme 8 und 9 der Kabelpritsche ruhen. Im Längsschnitt ist der Ausleger 6 dreieckförmig derart, daß sich die Schenkellänge des U-förmigen Profils,ausgehend von der Spitze des Auslegers 6, in Richtung auf den Stiel 5 kontinuierlich vergrößert.

An dem dem Stiel 5 zugewandten Ende des Auslegers 6 sind an die Schenkel des U-Profils insgesamt vier Haken 29 angeformt, die in die Öffnungen 26 des Stiels 5 einführbar sind. Die Anordnung und der Abstand der Haken 24 voneinander entspricht der Anordnung und dem Abstand der Haken 16 bzw. dem Abstand und der Anordnung der Öffnungen 26, womit die Ausleger 6 an beliebiger Stelle des Stiels 5 einzuhängen sind.

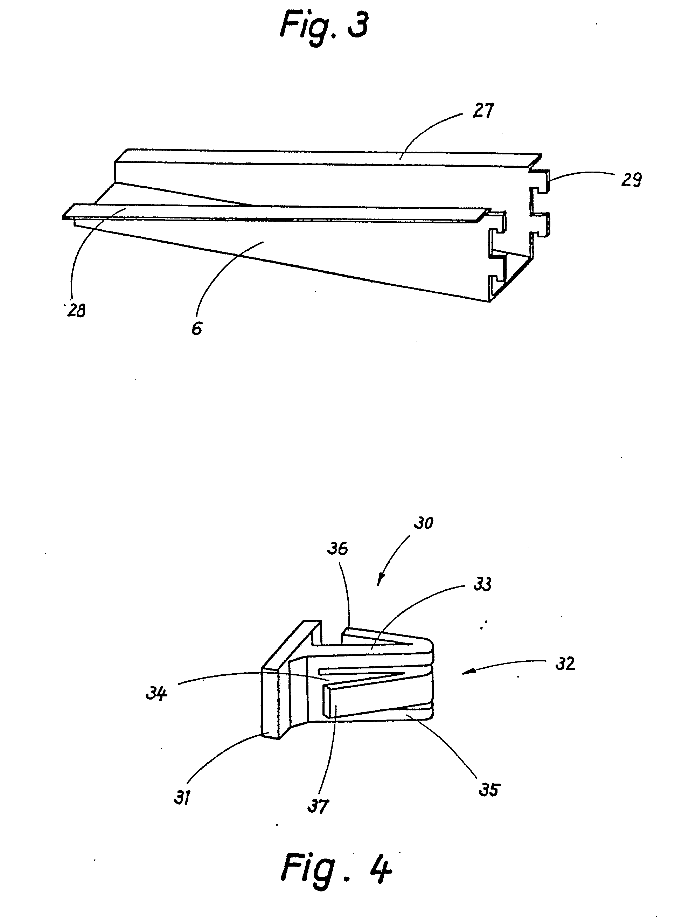

Um zu verhindern, daß die Haken 29 der Ausleger 6 im montierten Zustand aus den zugehörigen Öffnungen 26 des Stiels 5 freikommen können, ist ein in Fig. 4 veranschaulichtes Sicherungsteil 30 vorgesehen, das dazu dient, die Restöffnung auszufüllen, die verbleibt, wenn die Haken 29 des Auslegers 6 in die zugehörigen Öffnungen 26 eingehakt sind. Wie ersichtlich, hat das Sicherungsteil 30 etwa T-förmige Gestalt, wobei der Querbalken des T-Profils eine Anschlagplatte 31 bildet, in deren Mitte ein zweifach längsgeschlitzter Mittelschenkel 32 angeformt ist. Die durch die Schlitzung

- 8 -

entstandenen Stege 33, 34 und 35 tragen Spreizfedern, von denen nur die Spreizfedern 36 und 37 in der Figur sichtbar sind. Die Spreizfedern sind in Richtung der Anschlagplatte 31 geöffnet, wobei ihre freien Enden zu der Anschlagplatte 38 in einem solchen Abstand stehen, der etwa der Wandstärke des Stiels 5 entspricht.

Bei der Montage des Traggestells werden zunächst je nach erforderlicher Belastungsfähigkeit ein oder zwei Kopfplatten 3a bzw. 3b in den Stiel 5 eingehängt, so daß die oberste Reihe Öffnungen 26 des Stiels 5 mit der obersten Reihe der Haken 16 der Kopfplatten 3a, 3b in Eingriff kommt. Hierbei legen sich die Anschläge 18 und 23, die sich etwa in der Höhe der obersten Reihe von Haken 16 befinden, von außen an den Stiel 5 an, ebenso wie dies die Fortsätze 20 und 21 im Bereich des unteren Flansches 11 tun. Hierdurch wird sichergestellt, daß an dem Stiel 5 angreifende Querkräfte, die den Stiel 5 um eine Schwenkachse senkrecht zu der Kopfplatte 3 verdrehen wollen, nicht durch die Haken 16, sondern vielmehr durch die Fortsätze 18 bis 21 aufgenommen werden können, um ein mögliches Abscheren der Haken 16 zu vermeiden.

Das insoweit vormontierte Traggestell 1 wird nunmehr mit den Befestigungsöffnungen 12 und 13 auf die in der Befestigungsfläche 2 entsprechend verankerten Befestigungsbolzen 14 und 15 geschoben und durch entsprechende Muttern gesichert. Falls wegen Unebenheiten oder Neigungen in der Decke 2 keine lotrechte Befestigung des Stiels 5 möglich ist, kann, wie oben ausgeführt, zwischen der Decke 2 und dem Flansch 10 der Kopfplatte 3 eine weitere Ausgleichsmutter verwendet werden, um unerwünschte Ungleichmäßigkeiten der Decke 2 auszugleichen.

Nachdem der Stiel 5 insoweit an der Decke 2 befestigt ist, werden je nach Bedarf, ein oder mehrere Ausleger 6 mit ihren Haken 29 in die Öffnungen 26 des Stiels 5 eingehängt und anschließend wird wenigstens eine der verbleibenden Restöffnungen oberhalb des obersten Hakens 29 jedes Auslegers 6 mit einem Sicherungsteil 30 verschlossen.

Das Sicherungsteil 30 wird hierzu mit der Spitze des Mittelschenkels 32 voran in die Restöffnung eingedrückt, wobei die Spreizfedern 36 zunächst entsprechend zusammengedrückt werden und nach dem vollständigen Einführen des Sicherungsteils 30 wieder auf der Rückseite der entsprechenden Seitenwand des Stiels 5 auseinanderschnappen und damit ein Herausziehen der Sicherungsteile 30 verhindert wird, weil sich hierbei die Spreizfedern 36, 37 aufrichten würden.

Damit das Sicherungsteil 30 zuverlässig und gerade in der Restöffnung sitzt, ist es zweckmäßig, wenn, wie in Fig. 4 veranschaulicht, die Spreizfedern 36 und 37 zu unterschiedlichen Seiten aus dem Mittelschenkel 32 hervorstehen.

Anstelle einer Deckenbefestigung des Traggestells 1, wie beschrieben, ist auch eine Bodenbefestigung möglich, wobei dann jedoch die Haken 16 der Kopfplatte 3 nicht in Richtung auf den Flansch 10, sondern vielmehr in Richtung auf den Flansch 11 offen sein müssen, um eine sichere Verbindung zwischen Kopfplatte 3 und Stiel 5 zu ermöglichen.

- 10 -

Patentansprüche

1. Traggestell zur Halterung von Kabelpritschen oder -rinnen an Befestigungsflächen mit einem aus gelochtem Profilmaterial bestehenden Stiel, an dem die Kabelpritschen oder -rinnen tragende Ausleger befestigbar sind, mit wenigstens einer Kopfplatte, die einen in Richtung des Stiels verlaufenden Steg und einen an den Steg angeformten Flansch mit wenigstens einer einen in der Befestigungsfläche verankerten Bolzen aufnehmenden Öffnung aufweist, und mit einer an dem Steg vorgesehenen Stützvorrichtung, durch die der Stiel gegen Schwenkbewegungen um eine senkrecht zu dem Steg verlaufende Drehachse abstützbar ist, dadurch gekennzeichnet, daß der Steg (4) der Kopfplatte (3a, 3b) mit wenigstens einem in eine Öffnung (26) des Stiels (5) eingreifenden, einstückig angeformten Fortsatz (16) versehen ist.

2. Traggestell nach Anspruch 1, dadurch gekennzeichnet, daß der Steg (4) mit mehreren Fortsätzen (16) versehen ist, von denen jeder in eine andere Öffnung (26) des Stiels (5) eingreift.

3. Traggestell nach Anspruch 1, dadurch gekennzeichnet, daß der Fortsatz (16) als Haken ausgebildet ist, der entgegen der normalerweise in Stiellängsrichtung wirkenden Kraftkomponente offen ist.

4. Traggestell nach Anspruch 1, dadurch gekennzeichnet, daß der Fortsatz (16) aus dem Steg (4) ausgeklinkt ist.

5. Traggestell nach Anspruch 1, dadurch gekennzeichnet, daß die Stützvorrichtung (17) an dem Steg (4) sitzende und seitlich an dem Stiel (5) angreifende Ansätze (18, 19, 20, 21) aufweist.

6. Traggestell nach Anspruch 5, dadurch gekennzeichnet, daß die Ansätze (18, 19, 20, 21) aus dem Steg (4) ausgeklinkt sind.

7. Traggestell nach Anspruch 5, dadurch gekennzeichnet, daß die Ansätze (18, 19, 20, 21) in Form von Nasen in den Steg (4) eingeprägt sind.

8. Traggestell nach Anspruch 1, dadurch gekennzeichnet, daß an dem Steg (4) ein zweiter Flansch (11) angeformt ist, der dem Flansch (10) zur Befestigung an der Befestigungsfläche (2) gegenüberliegt.

9. Traggestell nach den Ansprüchen 5 und 8, dadurch gekennzeichnet, daß wenigstens einer der Ansätze (20, 21) eine senkrecht zu dem Steg (4) verlaufende Verlängerung des zweiten Flansches (11) ist.

10. Traggestell nach Anspruch 1, dadurch gekennzeichnet, daß die Ausleger (6) mit Haken (19) ausgebildet sind, die in Form und Größe den Fortsätzen (16) an dem Steg (4) entsprechen.

11. Traggestell nach Anspruch 1, dadurch gekennzeichnet, daß der Stiel (5) als Vierkantrohr ausgebildet ist, von dem jede Seitenfläche Öffnungen (26) für die
Aufnahme der Fortsätze (16) des Steges (4) aufweist.

12. Traggestell nach Anspruch 12, dadurch gekennzeichnet,
daß die Öffnungen (26) in dem Stiel (5) rechteckig
sind.

13. Traggestell nach Anspruch 11, dadurch gekennzeichnet,
daß die Öffnungen (26) in jeder Seitenfläche jeweils
paarweise, in äquidistanten Reihen übereinander angeordnet sind.

14. Traggestell nach Anspruch 10, dadurch gekennzeichnet,
daß zum Sichern von in die Öffnungen (26) des Stiels
(5) eingehängten Haken (29) der Ausleger (6) gegen
unbeabsichtigtes Freikommen aus den Öffnungen (26)
ein in die freibleibende Restöffnung einrastbares
Sicherungsteil (30) vorgesehen ist.

15. Traggestell nach Anspruch 14, dadurch gekennzeichnet,
daß das Sicherungsteil (30) T-förmige Gestalt aufweist,
dessen Mittelschenkel (32) wenigstens eine in Richtung auf den Querbalken (31) der T-förmigen Gestalt
offene Spreizfeder (36, 37) trägt, und daß die Höhe
des Sicherungsteils (30) etwa der Höhe der Restöffnung entspricht.

16. Traggestell nach Anspruch 15, dadurch gekennzeichnet,
daß der Mittelschenkel (32) in Längsrichtung geschlitzt
ist und jeder der so entstandenen Stege (33, 34, 35)
eine Spreizfeder (36, 37) trägt, die abwechselnd nach
der einen oder anderen Seite abstehen.

*Fig. 1*

0108222

Fig. 2

0108222

**Fig. 3**

**Fig. 4**